(19) Europäisches Patentamt
European Patent Office
Office européen des brevets

(11) **EP 4 560 774 A1**

(12) **EUROPEAN PATENT APPLICATION**

(43) Date of publication:
**28.05.2025 Bulletin 2025/22**

(21) Application number: **24187542.6**

(22) Date of filing: **09.07.2024**

(51) International Patent Classification (IPC):
*H01M 10/42* (2006.01)    *G01R 31/367* (2019.01)
*G01R 31/392* (2019.01)   *H01M 10/48* (2006.01)

(52) Cooperative Patent Classification (CPC):
**H01M 10/4285; G01R 31/367; G01R 31/392;**
H01M 10/482

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.11.2023 KR 20230164921**

(71) Applicant: **SAMSUNG SDI CO., LTD.
Giheung-gu
Yongin-si, Gyeonggi-do
17084 (KR)**

(72) Inventors:
• **PARK, Joonho**
**17084 Yongin-si (KR)**
• **YOON, Jihyeong**
**17084 Yongin-si (KR)**
• **MIN, Jihyeong**
**17084 Yongin-si (KR)**
• **OH, Sungsoo**
**17084 Yongin-si (KR)**
• **BAEK, Dohyun**
**17084 Yongin-si (KR)**
• **KANG, Kyoungmin**
**17084 Yongin-si (KR)**
• **SEO, Yechan**
**17084 Yongin-si (KR)**
• **AHN, Gijang**
**17084 Yongin-si (KR)**
• **JEONG, Areum**
**17084 Yongin-si (KR)**

(74) Representative: **Marks & Clerk LLP
15 Fetter Lane
London EC4A 1BW (GB)**

(54) **METHOD AND APPARATUS FOR PREDICTING BATTERY SWELLING**

(57)    A method and apparatus for predicting battery swelling may be provided. The method for predicting battery swelling may include, obtaining displacement data of at least one first node of a lower level assembly for a first time; and predicting swelling of a battery including the lower level assembly using the displacement data of the at least one first node obtained during the first time as input data of a prediction model.

EP 4 560 774 A1

FIG. 2

**Description**

## BACKGROUND

**(a) Field**

This disclosure relates to a method and apparatus for predicting battery swelling.

**(b) Description of the Related Art**

The basic unit of a secondary battery may be a cell, and it may be packed into a module, a pack, a rack, etc. depending on the power required by the product, and the packing structure may also vary.

The module may be configured by packing a plurality of cells. The pack may be configured by packing a plurality of modules. The rack may be configured by packing a plurality of packs. As charging and discharging of cells is repeated, the structure of the cell, module, pack, or rack may be deformed due to swelling, and battery performance may deteriorate. Therefore, a system that measures and predicts the degree of swelling of battery components may be desired.

## SUMMARY

At least one of the embodiments may provide a method and apparatus for predicting battery swelling that may predict battery swelling.

According to one embodiment, a method for predicting battery swelling may be provided. The method for predicting battery swelling may include, obtaining displacement data of at least one first node of a lower level assembly for a first time; and predicting swelling of a battery including the lower level assembly using the displacement data of the at least one first node obtained during the first time as input data of a prediction model and optionally generating a signal to control operation of the battery based on the prediction of the swelling.

The predicting of swelling of a battery may include, predicting, by the prediction model, a displacement tendency of the at least one first node from displacement data of the at least one first node; calculating, by the prediction model, a swelling force of the at least one first node from the displacement tendency of the at least one first node; predicting, by the prediction model, displacement data of at least one second node of an upper level assembly affected by a swelling force of the at least one first node; predicting, by the prediction model, a displacement tendency of the at least one second node from displacement data of the at least one second node; and calculating, by the prediction model, a swelling force of the at least one second node from the displacement tendency of the at least one second node.

The predicting of swelling of a battery may further include, outputting, by the prediction model, whether the at least one second node is broken based on the swelling force of the at least one second node.

The lower level assembly may include at least one of a battery cell or a battery module assembled by combining at least one battery cell, and the upper level assembly may include a battery pack assembled by combining at least one battery module.

The lower level assembly may include a battery cell, and the upper level assembly may include a battery module assembled by combining at least one battery cell.

The predicting of displacement data of the at least one second node may include, predicting, by the prediction model, displacement data of the at least one second node from the swelling force of the at least one first node through a learned correlation between the lower level assembly and the upper level assembly.

The method for predicting battery swelling may further include, learning the prediction model using learning data including displacement data of a plurality of third nodes in each of a plurality of lower level assemblies and displacement data of a plurality of fourth nodes in each of a plurality of upper level assemblies, wherein the displacement data of the plurality of third nodes and displacement data of the plurality of fourth nodes may be obtained for a second time longer than the first time.

According to another embodiment, a battery swelling prediction apparatus for predicting swelling of a battery comprising a lower level assembly may be provided. The battery swelling prediction apparatus may include, a data collector configured to collect position data of at least one first node of the lower level assembly for a first time; a displacement calculator configured to calculate displacement data of the at least one first node from the position data of the at least one first node collected during the first time; and a predictor configured to comprise a prediction model and configured to predict swelling of the battery from displacement data of the at least one first node obtained during the first time using the prediction model and optionally configured to generate a signal configured to control operation of the battery based on the prediction of the swelling.

The prediction model may be configured to: predict a displacement tendency of the at least one first node from displacement data of the at least one first node, calculate a swelling force of the at least one first node from the displacement tendency of the at least one first node, predict displacement data of at least one second node of an upper level assembly affected by a swelling force of the at least one first node, predict a displacement tendency of the at least one second node from displacement data of the at least one second node, and calculate a swelling force of the at least one second node from the displacement tendency of the at least one second node.

The prediction model may be configured to predict displacement data of the at least one second node from the swelling force of the at least one first node through a learned correlation between the lower level assembly and the upper level assembly.

The prediction model may be configured to learn learning data including displacement data of a plurality of third nodes in each of a plurality of lower level assemblies and displacement data of a plurality of fourth nodes in each of a plurality of upper level assemblies, and the displacement data of the plurality of third nodes and displacement data of the plurality of fourth nodes may be configured to have been obtained for a second time longer than the first time.

The lower level assembly may include at least one of a battery cell or a battery module assembled by combining at least one battery cell, and the upper level assembly may include a battery pack assembled by combining at least one battery module.

The lower level assembly may include a battery cell, and the upper level assembly may include a battery module assembled by combining at least one battery cell.

The prediction model may be configured to output whether the at least one second node is broken from the swelling force of the at least one second node.

At least some of the above and other features of the invention are set out in the claims.

## BRIEF DESCRIPTION OF THE DRAWINGS

FIG. 1 is a diagram showing an example of a battery pack according to an embodiment.
FIG. 2 is a diagram illustrating an example of a battery swelling prediction apparatus according to an embodiment.
FIG. 3 is a diagram showing a method for learning the prediction model shown in FIG. 2.
FIG. 4 is a diagram showing an example of displacement data of the node.
FIG. 5 is a flowchart showing a method for predicting battery swelling according to an embodiment.
FIG. 6 is a diagram showing a battery swelling prediction apparatus according to another embodiment.

## DETAILED DESCRIPTION OF THE EMBODIMENTS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art. The drawings and description are to be regarded as illustrative in nature and not restrictive. Like reference numerals designate like elements throughout the specification. In the flowchart described with reference to the drawings in this specification, the order of operations may be changed, several operations may be merged, some operations may be divided, and specific operations might not be performed.

Throughout the specification and claims, if a part is referred to "comprise" or "include" a certain element, it may mean that it may further include other elements rather than exclude other elements, unless specifically indicated otherwise.

In addition, expressions described in the singular may be interpreted in the singular or plural unless explicit expressions such as "one" or "single" are used.

In addition, terms including an ordinal number, such as first, second, etc., may be used to describe various elements, but the elements are not limited by the terms. The above terms are used only for the purpose of distinguishing one element from another element. For example, without departing from the scope of the present disclosure, a first element may be referred to as a second element, and similarly, a second element may be referred to as a first element.

Furthermore, if a component is referred to be "connected" with another component, it includes not only the case where two components are "directly connected" but also the case where two components are "indirectly or non-contactedly connected" with another component interposed therebetween, or the case where two components are "electrically connected." On the other hand, if an element is referred to as "directly connected" to another element, it should be understood that no other element exists in the middle.

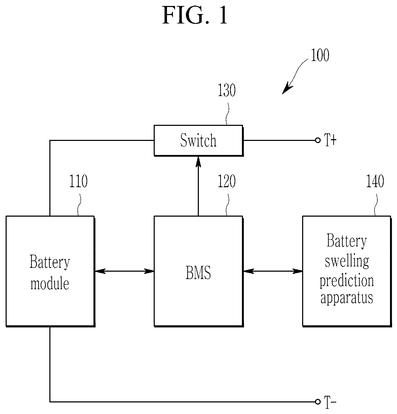

FIG. 1 is a diagram showing an example of a battery pack according to an embodiment.

Referring to FIG. 1, the battery pack 100 may include at least one battery module 110, a battery management system (BMS) 120, a switch 130, and a battery swelling prediction apparatus 140.

The battery pack 100 may be connected to an external device through terminals T+ and T-. If the external device is a charging device, the battery pack 100 may be charged by the charging device. If the external device is a load, the battery pack 100 may be discharged by the load.

The at least one battery module 110 may include a plurality of cells electrically connected to each other in series and/or parallel.

The switch 130 may control current paths during charging and discharging of the battery module 110. The closing and opening of the switch 130 may be controlled according to switch control signals supplied from the BMS 120.

The BMS 120 may control and manage the overall operation of the battery pack 100. The BMS 120 may collect the overall status of the battery module 110 and the cells included in the battery module 110, and monitor the overall status of the battery module 110 and the cells included in the battery module 110.

In some embodiments, the BMS 120 may measure or collect cell data detected by each cell of the battery module 110. For example, cell data may include voltage data of each battery cell. In some embodiments, the BMS 120 may collect data sensed by the battery module 110. For example, such data may include data regarding the current or temperature of the battery module 110.

In some embodiments, the BMS 120 may collect position information from at least one position sensor to measure displacement of the battery module 110 or battery cell at any position of the battery module 110, or any position of the battery cell. The BMS 120 may transmit the collected position information to the battery swelling prediction apparatus 140.

The BMS 120 may perform various control functions to adjust the state of the battery module 110 and the cells included in the battery module 110 based on the state data of the battery module 110 and the cells included in the battery module 110. As an example, the BMS 120 may control the charging and discharging current of the battery module 110 based on information such as a plurality of cell voltages and battery currents, and perform a cell balancing operation for a plurality of cells.

According to an embodiment, the BMS 120 may collect position information from at least one position sensor for measuring the displacement of the battery module 110 or a battery cell at arbitrary positions of the battery module 110 or arbitrary positions of the battery cell, and may transmit the collected position information to the battery swelling prediction apparatus 140.

The battery swelling prediction apparatus 140 may measure the displacement values at each position based on position information collected at arbitrary positions of the battery module 110 or arbitrary positions of the battery cell through the BMS 120, and may predict swelling of the battery pack 100 based on the displacement value at each position.

According to various embodiments, the BMS 120 may be an individual component or a circuit, or may be combined into one or more circuits or components, and/or may include or utilize a processor and memory, the memory storing instructions that, when executed by the processor, cause the BMS 120 to execute the operations described above and below.

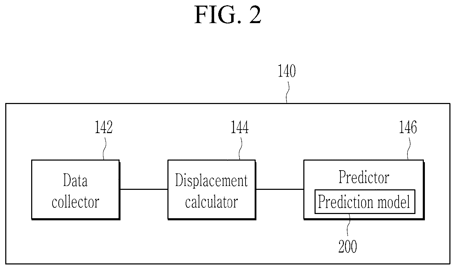

FIG. 2 is a diagram illustrating an example of a battery swelling prediction apparatus according to an embodiment.

Referring to FIG. 2, the battery swelling prediction apparatus 140 may include a data collector (or data collection circuit or component) 142, a displacement calculator (or displacement calculation circuit or component) 144, and a predictor (or prediction circuit or component) 146. According to various embodiments, each of the battery swelling prediction apparatus 140, the data collector 142, the displacement calculator 144, and/or the predictor 146 may be individual components or circuits, or may be combined into one or more circuits or components, and/or may include or utilize a processor and memory, the memory storing instructions that, when executed by the processor, cause the component to execute the operations described below.

The data collector 142 may collect position data at each position from position sensors mounted at arbitrary positions of the battery module 110 or a battery cell through the BMS 120.

The displacement calculator 144 may calculate a displacement value at each position using the position data at each position collected by the data collector 142. The displacement calculator 144 may calculate the displacement value from the difference between two temporally consecutive position data of the same position from the position data collected according to the collection interval.

In some embodiments, the displacement calculator 144 may perform three-dimensional (3D) modeling using position data at each position and calculate the displacement value at each position through 3D modeling.

The predictor 146 may predict the degree of swelling of the battery pack 100 using the displacement value at each position. The predictor 146 may predict the degree of swelling of the battery pack 100 from the displacement value at each position using a learned prediction model 200.

In some embodiments, the predictor 146 may predict the degree of swelling of the battery module 110 using displacement values at each position of the battery cell.

In some embodiments, the predictor 146 may predict the degree of swelling of the battery rack using displacement values at each position of the battery cell or battery module 110.

The prediction model 200 may be learned from learning data by a learning device.

The battery system may include battery cells, battery modules, battery packs, or battery racks depending on the power requirement desired by the product.

The battery cell is the basic unit of a battery system and may be composed of an anode, a cathode, a separator, and an electrolyte. In one embodiment, a number of position sensors may be mounted at different positions in the battery cell.

The battery module may be an assembly that combines a plurality of battery cells into one frame to increase the output power of the battery system and protect against external impact or vibration. In one embodiment, a number of position sensors may be mounted at different positions on the battery module.

As shown in FIG. 1, the battery pack may be an assembly in which several battery modules 110 are connected and a BMS 120, a switch 130, etc. are added. The battery swelling prediction apparatus 140 may be built into the battery pack or may be provided separately from the battery pack. In one embodiment, a number of position sensors may be mounted at different positions in the battery pack.

In some embodiments, a plurality of battery packs may be combined and assembled into a battery rack.

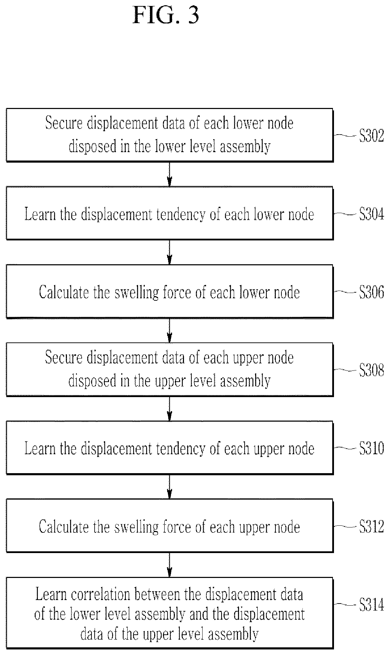

FIG. 3 is a diagram showing a method for learning the prediction model shown in FIG. 2.

The prediction model 200 may be learned using learning data.

The learning data may include displacement data of the battery pack, displacement data of the battery module, and displacement data of the battery cell. The learning data may further include displacement data of the battery pack. The displacement data may be calculated from position data by the displacement calculator 144 described above.

The prediction model 200 may secure displacement data of each lower node disposed or located in the lower level assembly (S302). The lower nodes may represent points in a lower level assembly where position sensors are disposed or located.

In the relationship between a battery cell and a battery module, the battery cell may be a lower level assembly and the battery module may be an upper level assembly. In the relationship between the battery module and the battery pack, the battery module may be a lower level assembly and the battery pack may be an upper level assembly. In the relationship between the battery pack and the battery rack, the battery pack may be a lower level assembly and the battery rack may be an upper level assembly.

The prediction model 200 may learn the displacement tendency of each lower node using displacement data of lower nodes disposed or located in the lower level assembly (S304).

Additionally, the prediction model 200 may calculate the swelling force of each lower node based on the displacement data of each lower node (S306). As an example, the prediction model 200 may calculate the swelling force from the displacement data of the lower node using Equation 1.

$$\text{(Equation 1)}$$

$$F = A \times \text{Function} (H)$$

Here, F may represent swelling force. H is displacement data and may represent a displacement value. A may represent the characteristics of the lower level assembly, and Function may represent physical property data such as structural characteristics or eigenvalues of the lower level assembly.

The prediction model 200 may secure displacement data of each upper node disposed or located in the upper level assembly (S308).

The prediction model 200 may learn the displacement tendency of each upper node using displacement data of the upper nodes disposed or located in the upper level assembly (S310).

The prediction model 200 may calculate the swelling force of each upper node using the displacement data of each upper node (S312). The swelling force of each upper node may be calculated using Equation 1. In this case, the characteristics of the upper level assembly may be applied to A of Equation 1, and the physical property data such as structural characteristics or eigenvalues of the upper level assembly may be applied to Function of Equation 1.

In addition, the prediction model 200 may learn the correlation between the displacement data of the lower level assembly and the displacement data of the upper level assembly by using the displacement data of each lower level node and swelling force of each lower level node and the displacement data of each upper level node (S314). The upper level assembly may be constructed by combining a plurality of lower level assemblies. The swelling force of each lower node may be calculated based on the displacement data of each lower node. The swelling force generated by the displacement data of at least some of the lower nodes may affect the displacement data of the upper nodes corresponding to at least some of the lower nodes. Therefore, using the displacement data of each lower node and swelling force of each lower node and the displacement data of each upper node, a correlation may be derived indicating the effect of the swelling force generated by displacement data of at least some lower nodes on the displacement data of upper nodes corresponding to at least some lower nodes, and the prediction model 200 may learn the correlation between the displacement data of the lower level assembly and the displacement data of the upper level assembly, or derive the correlation using a mathematical formula.

When this correlation may be learned, the prediction model 200 may predict the displacement data of the corresponding upper node using the learned correlation from the displacement data of at least some of the lower nodes during prediction, and may predict the swelling force of the upper node from the displacement data of the upper node.

As one example, the prediction model 200 may calculate the swelling force of the upper node as shown in Equation 2 from the swelling force of the lower node calculated from the displacement data of at least some of the lower nodes.

$$F_{upper\ node\ 1} = A1\ X\ Function\ (H1) + A2\ X\ Function\ (H2) + A3\ X\ Function\ (H3) \qquad \text{(Equation 2)}$$

In Equation 2, it was assumed that the lower nodes that affect upper node 1 are lower node 1, lower node 2, and lower node 3 according to the learned correlation. H1 may represent displacement data of lower node 1, H2 may represent displacement data of lower node 2, and H3 may represent displacement data of lower node 3.

The prediction model 200 may determine whether the upper node is broken by comparing the swelling force of the upper node with a reference value (e.g., a set or predetermined reference value), and output whether the upper node is broken.

The prediction model 200 may determine whether the upper node is at risk of breakage based on the swelling force of the upper node, and output, e.g. a signal, indicating whether the upper node is at risk of breakage.

According to some embodiments, in response to the predictor and/or the prediction model 200 of the battery swelling prediction apparatus 140 identifying, determining, or predicting that the upper node is at risk of breakage based on the swelling force of the upper node, the battery swelling prediction apparatus 140 may be configured to transmit a signal to the BMS 120 to control an operation of one or more battery cells or the battery module 110. For example, in some embodiments, in response to the signal from the battery swelling prediction apparatus 140, the BMS 120 may control the switch and/or the battery module to discontinue operation of one or more battery cells.

Meanwhile, at least one intermediate level assembly may exist between the lower level assembly and the upper level assembly. For example, in the relation between battery cell, the battery module, and the battery pack, the battery module may be an intermediate level assembly. In this case, the prediction model 200 may learn the displacement tendency of the battery cells and the displacement tendency of the battery module, and correlations between the displacement data of the battery cells and the displacement of the battery module using the displacement data of the battery cells and the displacement data of the battery module, by the method described above. In addition, the prediction model 200 may learn the displacement tendency of the battery modules and the displacement tendency of the battery pack, and correlations between the displacement data of the battery modules and the displacement of the battery pack using the displacement data of the battery modules and the displacement data of the battery pack, by the method described above. Using the prediction model 200 learned in this way, swelling in the battery pack may be predicted from the displacement data of the battery cells or the displacement data of the battery modules. Additionally, data collected from the battery module(s) 110 during operation may enable the BMS 120 to control operation of one or more battery cells.

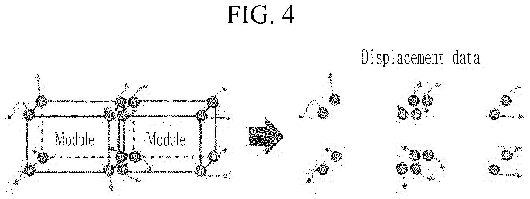

FIG. 4 is a diagram showing an example of displacement data of the node.

Referring to FIG. 4, position data of nodes 1 to 8 over time may be obtained from position sensors disposed or located in the battery module, and displacement data of nodes 1 to 8 over time may be obtained from the position data of nodes 1 to 8 over time.

The displacement data of nodes 1 to 8 according to the collected time may be collected from a large number of battery modules, and the displacement data of nodes 1 to 8 collected from a large number of battery modules may be used as learning data. When the prediction model 200 may be learned using displacement data of nodes 1 to 8 over time, the displacement tendency of nodes 1 to 8 may be learned. The prediction model 200 may be learned using a supervised learning method or an unsupervised learning method. As an unsupervised learning method, for example, a K-means algorithm or an association rule analysis algorithm may be used.

Using the prediction model 200 learned in this way, the displacement tendency of the node may be predicted using only the displacement data of the node corresponding to certain times.

Similarly, displacement data of each node over time may be collected from the position data of each node obtained from a position sensor disposed or located in the battery cell, and the prediction model 200 may be learned using the displacement data of each node over time.

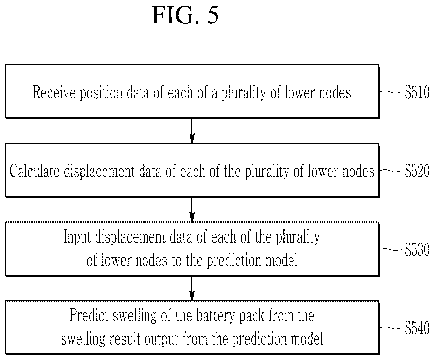

FIG. 5 is a flowchart showing a method for predicting battery swelling according to an embodiment.

Referring to FIG. 5, the battery swelling prediction apparatus 140 may receive position data of each of a plurality of lower nodes measured from the battery pack on which swelling prediction is to be performed (S510). The position data of the plurality of lower nodes may be received from a plurality of position sensors disposed or located at positions (e.g. set or predetermined positions) on or relative to battery cells or battery modules within the battery pack. Through simulation, a number (e.g. a set or predetermined number) of positions with a high probability of swelling occurring in a battery cell or battery module may be selected, and position sensors may be disposed or located at a number (e.g. a set or a predetermined number) of selected positions.

The battery swelling prediction apparatus 140 may calculate displacement data of each of the plurality of lower nodes from the position data of the lower nodes measured from each of the plurality of position sensors for a time (e.g. a set or predetermined time) (S520).

The battery swelling prediction apparatus 140 may input displacement data of each of the plurality of lower nodes as input data to the prediction model 200 (S530).

The prediction model 200 may output swelling results of the battery pack from displacement data of each of the plurality of lower nodes.

The battery swelling prediction apparatus 140 may predict swelling of the battery pack from the swelling result output from the prediction model 200 (S540).

According to some embodiments, in response to the predictor and/or the prediction model 200 of the battery swelling prediction apparatus 140 identifying, determining, or predicting that the upper node is at risk of breakage based on the swelling force of the upper node and/or the lower node, the battery swelling prediction apparatus 140 may be configured to transmit a signal to the BMS 120 to control an operation of one or more battery cells or the battery module 110. For example, in some embodiments, in response to the signal from the battery swelling prediction apparatus 140, the BMS may control the switch and/or the battery module to discontinue operation of one or more battery cells.

The prediction model 200 may predict the displacement tendency of each lower node from the displacement data of each lower node. The prediction model 200 may calculate the swelling force of each lower node corresponding to the displacement tendency of each lower node, and may predict the displacement tendency of the corresponding upper node from the swelling force of each lower node. In addition, the prediction model 200 may calculate the swelling force of each upper node corresponding to the displacement tendency of each upper node. The prediction model 200 may predict the final swelling result of the battery pack from the swelling force of each upper node and output the predicted swelling result of the battery pack.

In some embodiments, the prediction model 200 may output whether each lower node and/or each upper node is broken, and the battery swelling prediction apparatus 140 may predict and output whether each lower node and/or each upper node is broken from the output of the prediction model 200.

In some embodiments, the prediction model 200 may output a final swelling probability of the battery pack, and the battery swelling prediction apparatus 140 may predict whether the battery pack is swelling from the output of the prediction model 200, and may output the predicted result.

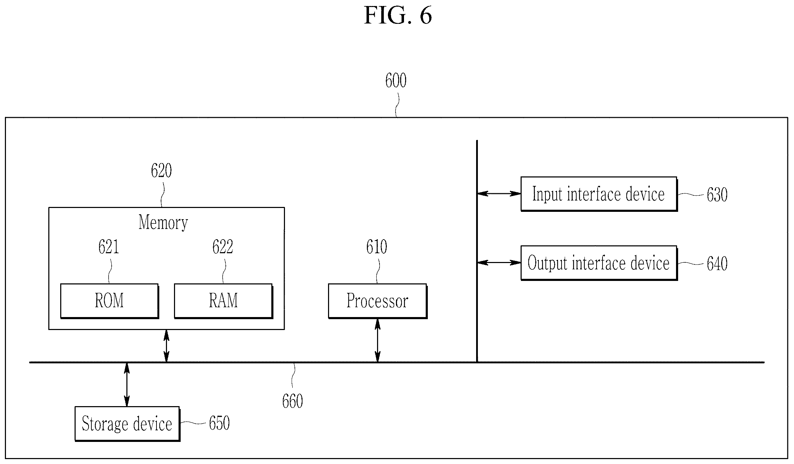

FIG. 6 is a diagram showing a battery swelling prediction apparatus according to another embodiment.

Referring to FIG. 6, the battery swelling prediction apparatus 600 may represent a computing device that implements the method for predicting a battery swelling described above.

The battery swelling prediction apparatus 600 may include at least one processor 610, a memory 620, an input interface device 630, an output interface device 640, and a storage device 650. Each component may be connected by a bus 660 and may communicate with each other. Additionally, each component may be connected through an individual interface or individual bus centered on the processor 610, rather than the common bus 660.

The processor 610 may be implemented as various types such as an application processor (AP), a central processing unit (CPU), a graphics processing unit (GPU), etc., and may be any semiconductor device that executes a command stored in the memory 620 or storage device 650. The processor 610 may execute program commands stored in at least one of the memory 620 and the storage device 650. This processor 610 may be configured to implement the functions and methods described based on FIGS. 1 to 5 above.

The memory 620 and storage device 650 may include various types of volatile or non-volatile storage media. For example, the memory 620 may include read-only memory (ROM) 621 and random access memory (RAM) 622. In an embodiment, the memory 620 may be disposed or located inside or outside the processor 610, and the memory 620 may be connected to the processor 610 through various known means.

The input interface device 630 may be configured to provide data to the processor 610.

The output interface device 640 may be configured to output data from the processor 610.

According to at least one of the embodiments, using position data measured from a small number of position sensors installed in a lower level assembly, such as a battery cell or battery module, swelling of a upper level assembly, such as a battery pack or a battery rack may be predicted.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, a flash drive, or the like. Also, a person of skill in the art should recognize that the functionality of various computing devices may be combined or integrated into a single computing device, or the functionality of a particular computing device may be distributed across one or more other computing devices without departing from the scope of the disclosed embodiments of the present invention.

Although the embodiments of the present disclosure have been described in detail above, the scope of the present disclosure is not limited thereto, and various modifications and improvements of those skilled in the art using the basic concepts of the present disclosure defined in the following claims are also included in the present disclosure.

**<Description of some of the Reference symbols>**

100: Battery pack
110: Battery module
120: BMS
130: Switch
140: Battery swelling prediction apparatus
142: Data collector
144: Displacement calculator
146: predictor
200: prediction model

**Claims**

1. A method for predicting battery swelling, the method comprising:

   obtaining displacement data of at least one first node of a lower level assembly for a first time; and
   predicting swelling of a battery including the lower level assembly using the displacement data of the at least one first node obtained during the first time as input data of a prediction model, and optionally generating a signal to control operation of the battery based on the prediction of the swelling.

2. The method as claimed in claim 1, wherein
   the predicting of swelling of a battery comprises:

   predicting, by the prediction model, a displacement tendency of the at least one first node from displacement data of the at least one first node;
   calculating, by the prediction model, a swelling force of the at least one first node from the displacement tendency of the at least one first node;
   predicting, by the prediction model, displacement data of at least one second node of an upper level assembly affected by a swelling force of the at least one first node;
   predicting, by the prediction model, a displacement tendency of the at least one second node from displacement data of the at least one second node; and
   calculating, by the prediction model, a swelling force of the at least one second node from the displacement tendency of the at least one second node.

3. The method as claimed in claim 2, wherein
   the predicting of swelling of a battery further comprises:
   outputting, by the prediction model, whether the at least one second node is broken based on the swelling force of the at least one second node.

4. The method as claimed in claim 2, wherein

   the lower level assembly comprises at least one of a battery cell or a battery module assembled by combining at least one battery cell, and
the upper level assembly comprises a battery pack assembled by combining at least one battery module.

5. The method as claimed in claim 2, wherein

the lower level assembly comprises a battery cell, and
the upper level assembly comprises a battery module assembled by combining at least one battery cell.

6. The method as claimed in claim 2, wherein
the predicting of displacement data of the at least one second node comprises:
predicting, by the prediction model, displacement data of the at least one second node from the swelling force of the at least one first node through a learned correlation between the lower level assembly and the upper level assembly.

7. The method as claimed in claim 2, further comprising:

learning the prediction model using learning data including displacement data of a plurality of third nodes in each of a plurality of lower level assemblies and displacement data of a plurality of fourth nodes in each of a plurality of upper level assemblies,
wherein the displacement data of the plurality of third nodes and displacement data of the plurality of fourth nodes are obtained for a second time longer than the first time.

8. An apparatus for predicting swelling of a battery comprising a lower level assembly, the apparatus comprising:

a data collector configured to collect position data of at least one first node of the lower level assembly for a first time;
a displacement calculator configured to calculate displacement data of the at least one first node from the position data of the at least one first node collected during the first time; and
a predictor configured to comprise a prediction model and configured to predict swelling of the battery from displacement data of the at least one first node obtained during the first time using the prediction model and optionally configured to generate a signal configured to control operation of the battery based on the prediction of the swelling.

9. The apparatus as claimed in claim 8, wherein
the prediction model is configured to:

predict a displacement tendency of the at least one first node from displacement data of the at least one first node,
calculate a swelling force of the at least one first node from the displacement tendency of the at least one first node,
predict displacement data of at least one second node of an upper level assembly affected by a swelling force of the at least one first node,
predict a displacement tendency of the at least one second node from displacement data of the at least one second node, and
calculate a swelling force of the at least one second node from the displacement tendency of the at least one second node.

10. The apparatus as claimed in claim 9, wherein
the prediction model is configured to predict displacement data of the at least one second node from the swelling force of the at least one first node through a learned correlation between the lower level assembly and the upper level assembly.

11. The apparatus as claimed in claim 9, wherein

the prediction model is configured to learn learning data including displacement data of a plurality of third nodes in each of a plurality of lower level assemblies and displacement data of a plurality of fourth nodes in each of a plurality of upper level assemblies, and
the displacement data of the plurality of third nodes and displacement data of the plurality of fourth nodes are configured to have been obtained for a second time longer than the first time.

**12.** The apparatus as claimed in claim 9, wherein

the lower level assembly comprises at least one of a battery cell or a battery module assembled by combining at least one battery cell, and
the upper level assembly comprises a battery pack assembled by combining at least one battery module.

**13.** The apparatus as claimed in claim 9, wherein

the lower level assembly comprises a battery cell, and
the upper level assembly comprises a battery module assembled by combining at least one battery cell.

**14.** The apparatus as claimed in claim 9, wherein
the prediction model is configured to output whether the at least one second node is broken from the swelling force of the at least one second node.

FIG. 1

FIG. 2

FIG. 3

| Secure displacement data of each lower node disposed in the lower level assembly | ~ S302 |

↓

| Learn the displacement tendency of each lower node | ~ S304 |

↓

| Calculate the swelling force of each lower node | ~ S306 |

↓

| Secure displacement data of each upper node disposed in the upper level assembly | ~ S308 |

↓

| Learn the displacement tendency of each upper node | ~ S310 |

↓

| Calculate the swelling force of each upper node | ~ S312 |

↓

| Learn correlation between the displacement data of the lower level assembly and the displacement data of the upper level assembly | ~ S314 |

FIG. 4

Displacement data

# FIG. 5

Receive position data of each of a plurality of lower nodes — S510

↓

Calculate displacement data of each of the plurality of lower nodes — S520

↓

Input displacement data of each of the plurality of lower nodes to the prediction model — S530

↓

Predict swelling of the battery pack from the swelling result output from the prediction model — S540

# FIG. 6

Europäisches
Patentamt

European
Patent Office

Office européen
des brevets

**EUROPEAN SEARCH REPORT**

**Application Number**

EP 24 18 7542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 585 926 A (SHANGHAI LIXI MICROELECTRONICS TECH CO LTD) 10 January 2023 (2023-01-10) * paragraphs [0108], [0109]; claims 1-9 * | 1-14 | INV. H01M10/42 G01R31/367 G01R31/392 H01M10/48 |
| X | US 2016/116548 A1 (GHANTOUS DANIA [US] ET AL) 28 April 2016 (2016-04-28) * paragraph [0006] - paragraph [0008]; claims 1-3 * | 1,8 | |

TECHNICAL FIELDS
SEARCHED      (IPC)

H01M
G01R

The present search report has been drawn up for all claims

| Place of search | Date of completion of the search | Examiner |
|---|---|---|
| Munich | 11 December 2024 | Topalov, Angel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 4 560 774 A1

**ANNEX TO THE EUROPEAN SEARCH REPORT
ON EUROPEAN PATENT APPLICATION NO.**

EP 24 18 7542

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2024

| Patent document cited in search report | Publication date | Patent family member(s) | Publication date |
|---|---|---|---|
| CN 115585926 A | 10-01-2023 | NONE | |
| US 2016116548 A1 | 28-04-2016 | CN 105548889 A | 04-05-2016 |
| | | US 2016116548 A1 | 28-04-2016 |
| | | US 2018149462 A1 | 31-05-2018 |

EPO FORM P0459